(19) **Europäisches Patentamt**
**European Patent Office**
**Office européen des brevets**

(11) **EP 1 772 438 B1**

(12) **EUROPEAN PATENT SPECIFICATION**

(45) Date of publication and mention
of the grant of the patent:
**29.06.2016 Bulletin 2016/26**

(51) Int Cl.:
***C03B 37/012*** (2006.01)     ***C03B 33/085*** (2006.01)

(21) Application number: **05739164.1**

(86) International application number:
**PCT/JP2005/008540**

(22) Date of filing: **10.05.2005**

(87) International publication number:
**WO 2005/115935 (08.12.2005 Gazette 2005/49)**

(54) **METHOD FOR PRODUCING AN OPTICAL FIBER PREFORM**

HERSTELLUNGSVERFAHREN FÜR EINE LICHTLEITFASERVORFORM

PROCÉDÉ POUR LA FABRICATION D'UNE PRÉFORME DE FIBRE OPTIQUE

(84) Designated Contracting States:
**DE FR IT**

(30) Priority: **28.05.2004 JP 2004159822**
             **28.05.2004 JP 2004159848**

(43) Date of publication of application:
**11.04.2007 Bulletin 2007/15**

(73) Proprietor: **Shin-Etsu Chemical Co., Ltd.**
**Tokyo (JP)**

(72) Inventor: **SAKASHITA, Mitsukuni;2c/o Shin-Etsu**
**Chemicai Co.,**
**ma; 3790224 (JP)**

(74) Representative: **Pfenning, Meinig & Partner mbB**
**Patent- und Rechtsanwälte**
**Joachimsthaler Straße 12**
**10719 Berlin (DE)**

(56) References cited:
**JP-A- 4 154 642**     **JP-A- 6 115 961**
**JP-A- 9 030 825**     **JP-A- 10 081 535**
**JP-A- 10 158 024**     **JP-A- 2000 264 662**
**JP-A- 2001 080 931**     **JP-A- 2002 037 639**

**Description**

Technical Field

The present invention relates to a method for manufacturing a glass base material for manufacturing an optical fiber.

More particularly, the present invention relates to a method for manufacturing a glass base material having an end shape suitable for drawing of an optical fiber.

Background Art

A large-scale glass base material is elongated in an axial direction, particularly, a vertical direction and is divided with predetermined length after being heated in a heating furnace such as an electric furnace, in order to be processed to a glass base material having a diameter suitable for drawing.

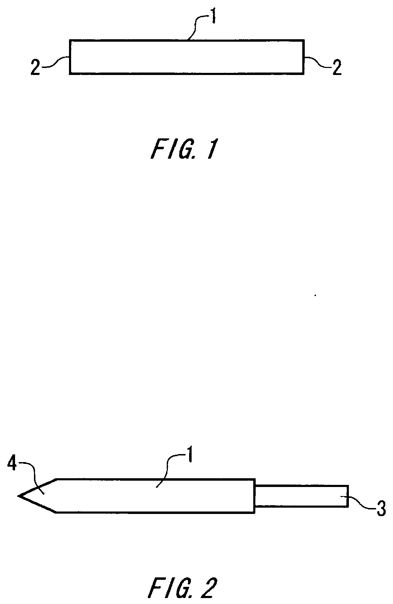

Fig. 1 is a schematic diagram showing a glass base material made by elongating a large-scale glass base material in an electric furnace. An elongated glass base material 1 has mechanical cutting faces 2 cut by a face perpendicular to a central axis on its both ends.

As shown in a schematic diagram of Fig. 2, a dummy rod 3 for attaching the glass base material 1 to a drawing apparatus is welded to one end of the manufactured glass base material 1. This portion is gripped. In order to easily perform the start of drawing, the other end is processed in the shape of taper and includes a taper portion 4.

The welding of the dummy rod 3 to one end of the glass base material 1 and the formation of the taper portion 4 on the other end are performed by means of a glass lathe in many cases.

For example, a method for processing a taper shape by means of a glass lathe includes methods disclosed in Patent Documents 1 and 2.

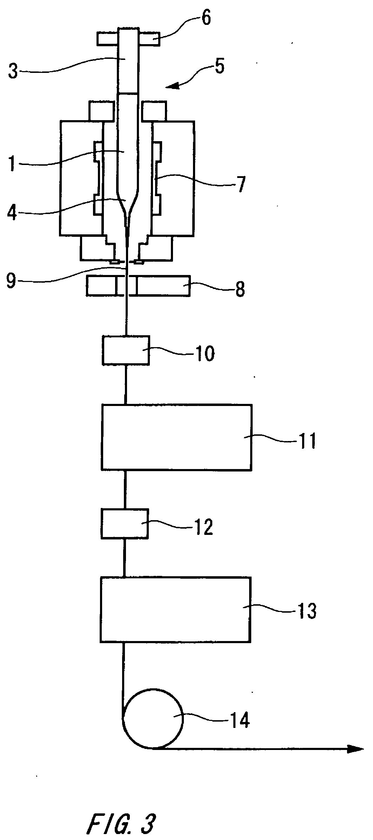

In the glass base material 1 having mechanical cutting faces on its both ends, the dummy rod 3 is connected to the one end and the taper portion 4 is formed on the other end. The glass base material (hereinafter, referred to as "a glass base material for drawing") having the formed taper portion 4 is attached to a drawing apparatus by making a feeder 5 of the drawing apparatus grip the dummy rod 3 with a scroll chuck 6 as shown in Fig. 3.

Next, the taper portion 4 of the glass base material for drawing is set at a predetermined position of the heating furnace 7 to start to be heated, and a leading end of the glass base material for drawing falls by softening the leading end. After the leading end falls, the leading end is caught and passes through a diameter measurement device 8. After that, when its diameter stably reaches desired wire size, coating and curing to an optical fiber 9 are performed by passing the optical fiber 9 through a first dice 10, a first ultraviolet-ray curing apparatus 11, a second dice 12, and a second ultraviolet-ray curing apparatus 13 in the order. After that, the optical fiber is reeled by a capstan (not shown) in a bobbin via a guide pulley 14.

After that, a drawing process becomes a steady state by gradually raising a feed speed and a drawing speed of the feeder 5 up to a regulation speed. The discrimination for a steady state is performed by whether all of the next indices are satisfied. In other words, index 1: a feed speed and a drawing speed reach a regulation speed, index 2: an outside diameter of the optical fiber is stable, and index 3: the prescribed excess length is withdrawn after the outside diameter of the optical fiber is stable. An optical fiber of a steady part drawn in a steady state is utilized as a product. An optical fiber of an unsteady part drawn in an unsteady state before that is discarded as a faulty part.

Here, the above index 3 is required because eccentricity of the drawn optical fiber is reduced due to the index 3. In the drawn optical fiber, the eccentricity is large in an unsteady part in an early stage of the start of drawing, the eccentricity is gradually reduced with the advance of drawing, and the eccentricity is stable at a certain value in a steady part. Therefore, in the unsteady part, a portion with large eccentricity exists even if the outside diameter satisfies specification. Although this outside diameter is within a specification range, the excess length of index 3 is required to exclude an optical fiber portion with large eccentricity from a product.

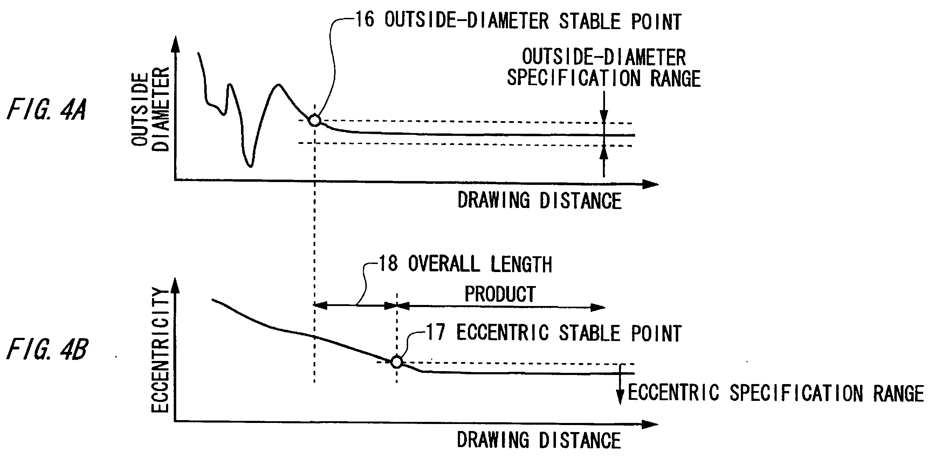

Fig. 4A shows the change of outside diameter of an optical fiber to drawing distance and Fig. 4B shows the change of eccentricity of the optical fiber. A point where an outside diameter of the optical fiber is in a specification range is an outside-diameter stable point 16 and a point where eccentricity goes into a specification range is an eccentric stable point 17.

The interval between the outside-diameter stable point 16 and the eccentric stable point 17 becomes the excess length 18 to be excluded. The eccentricity of optical fiber is expressed with an eccentricity ratio defined in the following Expression.

$$\text{Eccentricity ratio (\%)} = [(E_0{}^2 + E_{90}{}^2)^{1/2} / \{(D_0 + D_{90})/2\}] * 100$$

In the computation of eccentricity ratio, it is necessary to rotate the optical fiber in an axial direction and measure the profile at two positions of 0° and 90°. In Expression, $E_0$ is an amount of eccentricity in 0° and $E_{90}$ is an amount of eccentricity in 90°. Do is an outside diameter of the optical fiber in 0° and $D_{90}$ is an outside diameter in 90°.

[Patent Document 1] Japanese Patent Application Publication 2000-143268
[Patent Document 2] Japanese Patent Application Publication 2000-203864

JP-A-2001080931 discloses a method of providing a shape of a glass preform which can be stably drawn. A longitudinal bending is measured along the length of the glass preform and a correction may be carried out.

Disclosure of the Invention

Problems to be solved by the Invention

An optical fiber in an unsteady part in an early stage of the start of drawing cannot be used as a product due to eccentricity and thus is discarded. When the discarded optical fiber increases, yield decreases and thus a manufacturing cost increases. Therefore, in order to improve yield, it is necessary to shorten a time in an unsteady part in an early stage of the start of drawing and stabilize quality by realizing a steady state as soon as possible.

In recent years, a glass base material grows in size, in this relation an unsteady part area in an early stage of the start of drawing becomes long, and an amount of the discarded optical fiber also increases. The reason discarding an optical fiber in an unsteady part is that the optical fiber departs from the specification of optical fiber due to the fluctuation of outside diameter, the unevenness of cladding-material, or the like in addition to the above eccentricity. Here, an unsteady part area is shortened and thus yield improves by reducing all or either of values of the above indices.

An object of the present invention is to provide a glass base material having an end shape suitable for drawing, a method for manufacturing the glass base material, and a method for manufacturing an optical fiber, capable of immediately reducing the eccentricity of the optical fiber in an early stage of the start of drawing and of shortening an unsteady part area.

Means for Achieving the Objects

A method for fusing a cylindrical glass base material and manufacturing a glass base material for drawing having a straight base with a substantially constant diameter and a taper portion that is formed on one end of the straight base and of which a diameter becomes narrow as the taper portion departs from the straight base may includes: modifying a center-line displacement amount of a fusing point for a center line of an effective straight base of the glass base material to a predetermined numeric value to form a modified point; and fusing the glass base material at the modifed point to form the taper portion. In this way, distortion of the taper portion formed on the glass base material for drawing becomes smaller than that of the original taper portion, and the excess length generated from the start of drawing to a steady state is shortened.

Moreover, in the above manufacturing method, the modifying may include an operation heating the glass base material with a burner flame while rotating the glass base material by means of a glass lathe. In this way, a precise modification work can be performed.

Moreover, in the above manufacturing method, the predetermined numeric value may be 2.6mm.

In this way, an effect modifying the glass base material becomes remarkable, and the taper portion with a little distortion can be formed.

Moreover, in the above manufacturing method, the fusing may include an operation heating the glass base material with a burner flame.

In this way, each work of modifying and fusing can be continuously performed.

Moreover, in the above manufacturing method, the modified glass base material may be attached to a drawing apparatus, and the fusing performed just before drawing. In this way, each work of modifying, fusing, and drawing can be continuously performed. Moreover, since a series of works can be executed at a short time, an effect of modification does not deteriorate.

A glass base material for drawing may have a cylindrical straight base and a taper portion formed on one end of the straight base so that a diameter becomes narrow as the taper portion departs from the straight base, in which the taper portion is formed by fusing a modified point modified so that a center-line displacement amount for a center line of the whole cylindrical glass base material is less than or equal to a predetermined numeric value. In this glass base material, since the excess length generated from the start of drawing to a steady state is short, use efficiency of a raw material becomes high, and thus the optical fiber can be manufactured at low cost.

Another glass base material for drawing may have an effective straight base with an average outside diameter D and a taper portion that is formed on one end of a straight base that is a part of the effective straight base and of which a diameter becomes narrow as the taper portion departs from the straight base, in which a ratio $\delta/D$ between the average outside diameter D and a taper portion distortion $\delta$ is $\delta/D<=0.03$ when the glass base material for drawing is attached to a drawing apparatus and when a maximum value of a displacement amount of a center of the taper portion for a center of the taper portion side end in the straight base is the taper portion distortion $\delta$.

In this way, the excess length generated from the start of drawing to a steady state is shortened.

Moreover, in the above glass base material, the end of the straight base may be a part having an outside diameter of a value obtained by multiplying a coefficient $\beta$ in a range of 0.90 to 1.00 (no dimension) by the average outside diameter D. In this way, a reference when measuring distortion $\delta$ of the taper portion is prescribed.

Moreover, in the above glass base material, a length $L_D$ of the taper portion may, for example, be not less than one time of a mean value $D_M$ for outside diameters at three to ten points randomly extracted from the vicinity of center in a longitudinal direction of the glass base material in the range of 30 to 60% of overall length of the glass base material. In this way, the start of drawing from the taper portion becomes easy.

Moreover, in the above glass base material, the taper portion may be formed by fusing or grinding. In this way, the glass base material for drawing is prepared and drawing for manufacturing the optical fiber becomes easy.

According to the present invention, the underlying problem is solved by a method for manufacturing a glass base material for drawing an optical fiber according to claim 1. Embodiments of this method may show the features of the dependent claims. In particular, there is provided a method for manufacturing a glass base material for drawing having a straight base with an average outside diameter D and a taper portion that is formed on one end of the straight base and of which a diameter becomes narrow as the taper portion departs from the straight base, the method including drawing the glass base material for drawing in which a ratio $\delta/D$ between the average outside diameter D and a taper portion distortion $\delta$ is $\delta/D<=0.03$, when the glass base material for drawing is attached to a drawing apparatus and when a maximum value of a displacement amount of a center of the taper portion for a center of the taper portion side end in the straight base is the taper portion distortion $\delta$. In this way, it is possible to manufacture an optical fiber with a predominant optical characteristic at low cost.

Effects of the Invention

According to the present invention, it is possible to immediately and stably reduce eccentricity of the optical fiber in an early stage of the start of drawing and shorten an unsteady part area that is a faulty part of a product. In this way, it is possible to improve yield of the production of optical fiber and contribute to resource saving and reduction of manufacturing cost.

BRIEF DESCRIPTION OF THE DRAWINGS

Fig. 1 is a schematic diagram showing a glass base material elongated and manufactured in an electric furnace.

Fig. 2 is a schematic diagram showing a glass base material for drawing in which a dummy rod is welded to one end.

Fig. 3 is a schematic diagram showing an outline of a drawing apparatus.

Fig. 4A shows the change of outside diameter of an optical fiber to drawing distance and Fig. 4B shows the change of eccentricity to drawing distance.

Fig. 5 is a schematic diagram explaining distortion $\delta$.

Fig. 6 is a schematic diagram showing a glass base material used for distortion measurement.

Fig. 7A shows the change of outside diameter for a longitudinal direction of a glass base material for drawing and Fig. 7B shows the change of a displacement amount of a center line for the longitudinal direction of the glass base material for drawing.

Fig. 8A shows an outside diameter and a center-line displacement amount of a glass base material before taper formation and Fig. 8B shows a center-line displacement amount of the glass base material after forming the taper portion.

Fig. 9 is a view showing correlativity between a center-line displacement amount of a fusing position and distortion of a fused and formed taper portion.

Fig. 10 is a view showing relation between distortion and excess length.

Fig. 11 is a schematic block diagram showing a formation method of a grinding taper portion by grinding.

Fig. 12 is a schematic block diagram showing a method for modifying a taper portion by grinding.

Reference Numerals

| | |
|---|---|
| 1 | glass base material, |
| 2, 19 | mechanical cutting face, |
| 3 | dummy rod, |
| 4 | taper portion, |
| 5 | feeder, |
| 6 | scroll chuck, |
| 7 | heating furnace, |
| 8 | diameter measurement device, |
| 9 | optical fiber, |
| 10 | first dice, |
| 11 | first ultraviolet-ray curing apparatus, |
| 12 | second dice, |
| 13 | second ultraviolet-ray curing apparatus, |
| 14 | guide pulley, |
| 16 | outside-diameter stable point, |
| 17 | eccentric stable point, |
| 18 | excess length, |
| 20 | fusing taper portion, |
| 21 | end of straight base, |
| 22 | distortion evaluating end, |
| 23 | distortion evaluating area, |
| 24, 25 | approximate straight line, |
| 26 | rotational grindstone, |
| 27 | grinding taper portion |

The Best Embodiments of the Invention

As shown in Fig. 2, a dummy rod 3 is connected to one end of a glass base material for drawing attached to a drawing apparatus and a taper portion 4 is formed on the other end. As a result of committed researches, the present inventor has found that the eccentricity of optical fiber in an early stage of the start of drawing is largely controlled by the shape of the taper portion 4, the eccentricity of optical fiber in an early stage of the start of drawing becomes large according to a degree of distortion and thus excess length 18 shown in Fig. 4 tends to become long, and as a result, yield decreases, when the taper portion 4 has asymmetry for a center line of the glass base material for drawing, in order words when the taper portion 4 includes distortion.

However, although an end of the glass base material is precisely processed by fusing or mechanical grinding, a taper portion without distortion may not be obtained. Thus, as a result of a keen examination, the problem can be solved by measuring a center-line displacement amount (hereinafter, simply referred to as a center-line displacement amount) at a taper portion formation point (a fusing point when being formed by fusing) for a center line of an effective straight base of the glass base material, and fusing and forming the taper portion after modifying the center-line displacement amount to be not more than a predetermined numeric value, before forming the taper portion. In this way, it is possible to immediately reduce and stabilize the eccentricity of optical fiber in an early stage of the start of drawing and shorten excess length.

A method for manufacturing the glass base material of the present invention is to modify a center-line displacement amount at a fusing point for a center line of the glass base material to a value not more than a predetermined numeric value and then fuse the glass base material from the modified point to form the taper portion, and is to fuse the glass base material to form the taper portion after modifying the center-line displacement amount at a fusing point to a value not more than a predetermined numeric value of 2.6mm before fusing. In this way, it is possible to immediately stabilize the eccentricity of optical fiber in an early stage of the start of drawing to reduce it and shorten excess length. In addition, a fusing point is a point that is a starting end for forming the taper portion.

Moreover, according to the present invention, since the distortion of shape of the taper portion 4 is put in a predetermined number range, a ratio $\delta/D$ between distortion $\delta$ and an average outside diameter D is $\delta/D \leq 0.03$. In this way, it is possible to stably reduce the eccentricity of optical fiber in an early stage of the start of drawing and shorten excess length.

In addition, an end of a straight base of the glass base material for drawing, which is also a starting point of the taper portion, defines a part having an outside diameter made by multiplying a coefficient $\beta$ by an average outside diameter D. The coefficient $\beta$ is in a range of 0.90 to 1.00 (no dimension). For example, assuming that $\beta$=0.98 and the average outside diameter D=80mm, the end of straight base is a position reaching an outside diameter =0.98*80=78.4mm in the vicinity of taper.

The glass base material for drawing including the taper portion is obtained by measuring a ratio $\delta$/D between distortion $\delta$ and the average outside diameter D, and a glass base material having distortion exceeding 1.00mm and a glass base material having $\delta$/D exceeding 0.03 are fused or grinded so as to be put in a predetermined numeric value. The length $L_D$ of the taper portion is processed so as to be not less than one time of a mean value $D_M$ of the outside diameter. $L_D$ less than one time is not preferable because an amount of softening material that does not become a fiber increases at the start of drawing.

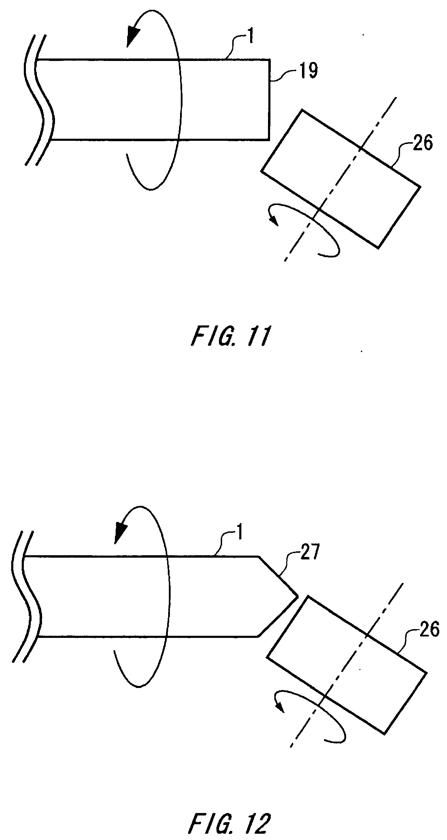

In addition, as shown in Fig. 11, the taper portion of the glass base material for drawing can be formed by grinding. That is to say, as shown in the present drawing, while rotating the glass base material 1 around a shaft in a longitudinal direction, grinding is performed by the rotating rotational grindstone 26 for a mechanical cutting face 19. In this way, a grinding taper portion 27 as shown in fig. 12 is formed on an end on which the mechanical cutting face 19 was placed. In addition, when forming the grinding taper portion 27 in this method, a rotation axis of the glass base material 1 also becomes an axis of the taper portion.

Moreover, in a method shown in fig. 12, it is possible to also modify the existing taper portion by grinding. That is to say, as shown in the present drawing, the shape of the grinding taper portion 27 can be modified by further performing grinding by the rotating rotational grindstone 26 for the grinding taper portion 27 that is already formed.

In addition, modification can be performed on the fusing taper portion formed by fusing by the combination of different kinds of processing methods such as grinding and so on.

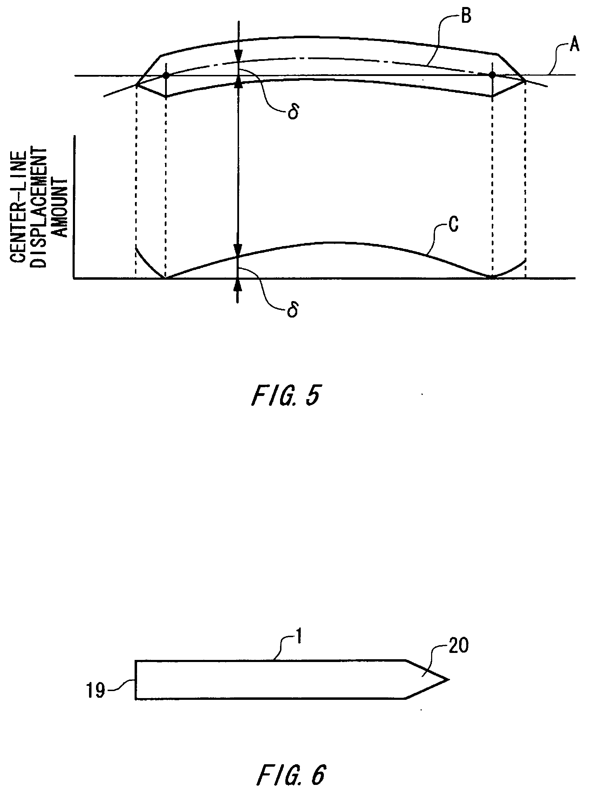

As shown in Fig. 5, distortion $\delta$ is expressed with a displacement amount between a straight line A passing through a center of an effective straight base both ends and a center line B of the glass base material, that is, a center-line displacement amount. A curved line C is a curved line showing a center-line displacement amount along a longitudinal direction of the glass base material. On the other hand, distortion $\delta$ of the taper portion is expressed with a maximum value of a center-line displacement amount between the end of straight base and the distortion evaluating end of the taper portion. The distortion evaluating area is an area between the end of straight base and the distortion evaluating end in one taper portion side.

In addition, the end of straight base of the glass base material for drawing is a starting point of the taper portion, and is a part having an outside diameter obtained by multiplying the coefficient $\beta$ by the average outside diameter D. Moreover, the coefficient $\beta$ is in a range of 0.90 to 1.00 (no dimension).

Moreover, the measurement of distortion of the taper portion uses a preform-shaped measuring device for optical fiber disclosed in Japanese Patent No. 3222777, but is not limited to this if it is an apparatus including a similar function.

The glass base material for drawing measured and sorted in this way is provided to drawing processing.

Fig. 6 shows a glass base material for drawing having the fusing taper portion 20 fused and formed after modifying a center-line displacement amount at a fusing point to a value not more than 2.6mm. This glass base material for drawing has an average outside diameter of $\Phi$62mm and the length of straight base of 1040mm, has the mechanical cutting face 19 on one end and the fusing taper portion 20 of length $L_D$ 77mm fused and formed on the other end. In addition to an outside diameter and a center-line displacement amount of this glass base material for drawing 1, a shape measuring device measures distortion $\delta$ of the fusing taper portion 20.

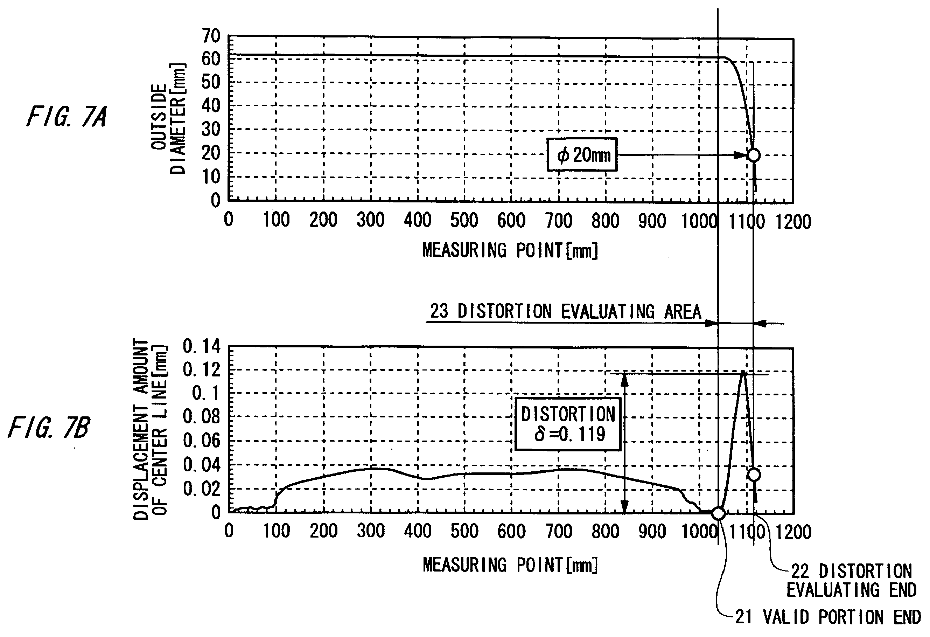

Figs. 7A and 7B show a measurement result. In addition, this glass base material for drawing may be formed by grinding of the taper portion. Fig. 7A shows the change of outside diameter for a longitudinal direction (horizontal axis) of a glass base material for drawing and Fig. 7B shows the change of a displacement amount of a center line for the longitudinal direction (horizontal axis) of the glass base material for drawing.

The measurement procedure of distortion $\delta$ of the fusing taper portion is as follows. First, an end 21 of the straight base of the glass base material and the distortion evaluating end 22 of the fusing taper portion are determined. An outside diameter is measured at five points adjacent to the center at which the outside diameter is comparatively stable, and a mean value $D_M$ for outside diameters is obtained. The end 21 of straight base is a portion of the coefficient $\beta$=0.98, that is, a position of which an outside diameter is 0.98*$D_M$.

When the glass base material for drawing is attached to a drawing apparatus, the distortion evaluating end 22 is a position equivalent to the center of a heating furnace heating unit and is a position at which an outside diameter of the taper portion is $\varphi$20mm in Fig. 7A, and heating by the drawing apparatus is started at the position at which the outside diameter of the glass base material for drawing is $\varphi$20mm. In Fig. 7B, the distortion $\delta$ of the taper portion is extremely small and $\delta$=0.119mm.

When the formation of taper portion is performed by fusing, the distortion of taper portion largely comes under the influence of a center-line displacement amount of the glass base material before forming the taper portion, particularly, a center-line displacement amount of a taper forming point (a fusing point). Therefore, it is necessary to previously reduce a center-line displacement amount of a fusing point to reduce the distortion of taper portion by fusing. In the present invention, as a result of keen examinations for relation between the center-line displacement amount of fusing point and the distortion of taper portion, there is made clear the center-line displacement amount of fusing point for realizing the distortion not more than a specified value.

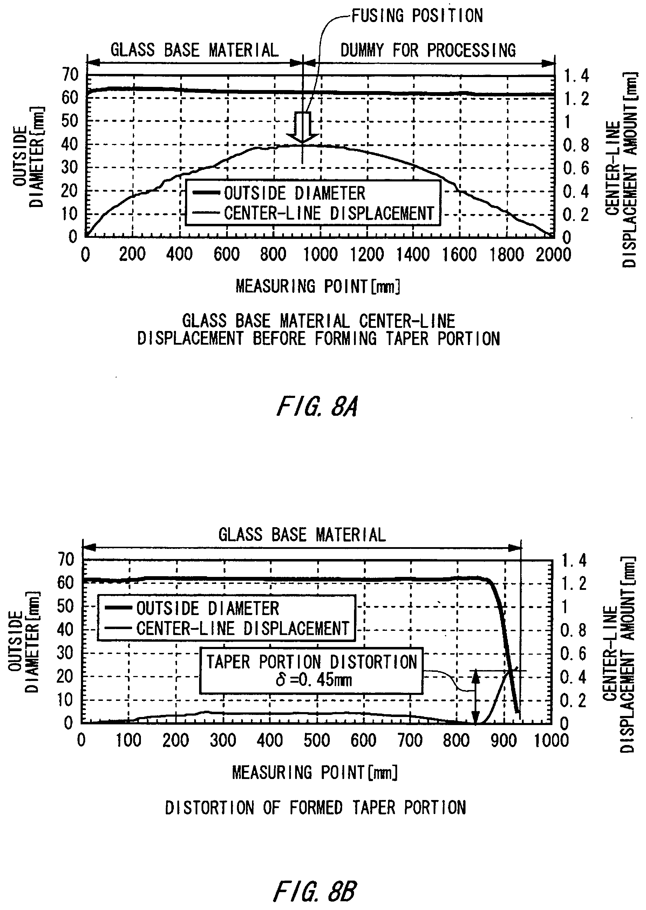

Figs. 8A and 8B are views exemplary showing a center-line displacement amount of a glass base material before forming a taper portion and distortion of the formed taper portion. Fig. 8A shows an outside diameter and a center-line displacement amount of the glass base material before forming the taper. In this example, the taper portion is formed by fusing at the substantially central position of the glass base material.

A left side of a fusing point is a portion that becomes the glass base material for drawing and a right side becomes a dummy rod for processing. Next, Fig. 8B shows a result obtained by measuring a center-line displacement amount of the glass base material for drawing in which the taper portion is formed. The distortion $\delta$ of the taper portion at this time becomes $\delta$=0.45mm according to the above definition, and a ratio $\delta/D$ between the distortion $\delta$ of the taper portion and the average outside diameter D of the straight base of the glass base material for drawing becomes 0.007.

The distortion $\delta/D$ for the average diameter D and the eccentricity of optical fiber have correlativity, and the eccentricity of optical fiber becomes large and the excess length gets longer when the distortion $\delta/D$ exceeds 0.03. For this reason, fusing processing is performed once more so as to be put in a predetermined numeric value when $\delta/D$ exceeds 0.03.

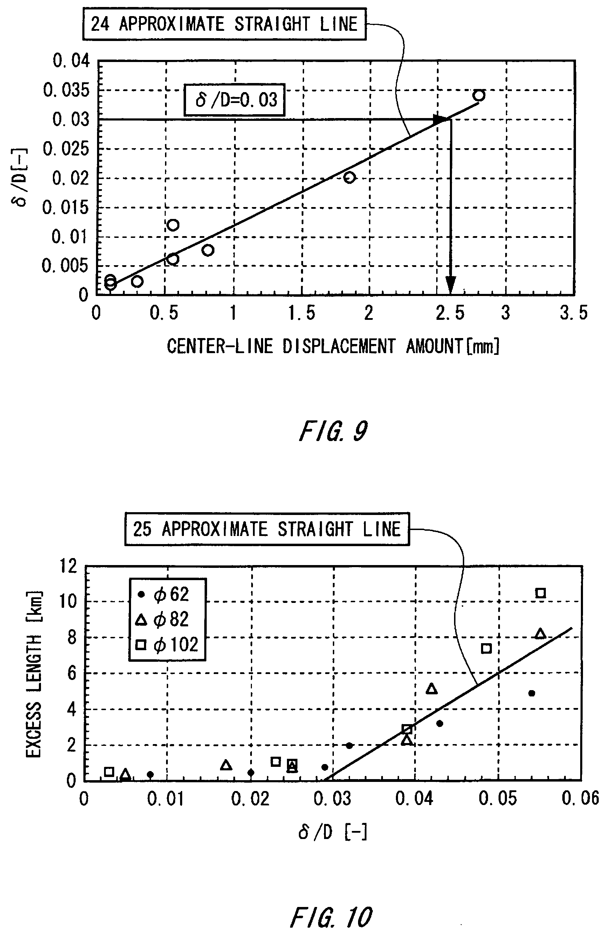

Moreover, Fig. 9 shows correlativity between a center-line displacement amount of a fusing position and distortion of a taper portion formed by fusing. A straight line in the drawing is an approximate straight line 24 obtained by being computing by least squares approximation from each plotting point. From Fig. 8, a center-line displacement amount e satisfying a range of $\delta/D03$ becomes e<=2.6mm. When the taper portion is formed by fusing after modifying the glass base material until the center-line displacement amount e<=2.6mm, it is possible to sufficiently reduce the distortion of taper portion.

[Embodiment 1]

The glass base material is modified so that a center-line displacement amount becomes not more than 2.6mm by attaching the glass base material of an average outside diameter $\varphi$62mm and length 1100mm having the mechanical cutting face 2 on both ends to a glass lathe including a shape measuring device as shown in Fig. 1, measuring a center-line displacement amount of the glass base material, and heating and softening the glass base material with a burner flame while rotating the glass base material, when the center-line displacement amount at the fusing point forming the taper portion exceeds 2.6mm. Next, the glass base material for drawing is formed by fusing the glass base material at the above fusing point and forming the fusing taper portion as shown in Fig. 6.

In the glass base material for drawing, a center-line displacement amount between the end of straight base of which an outside diameter is $0.98*D_M$=60.8mm and the distortion evaluating end of which the outside diameter of taper portion is $\Phi$20mm, that is, the distortion of taper portion is extremely small, and $\delta$=0.119mm and $\delta/D$=0.002. In this manner, since there is drawn the glass base material for drawing made by sufficiently reducing the distortion of taper portion, it is possible to improve yield when manufacturing an optical fiber and thus reduce manufacturing cost of the optical fiber.

[Embodiment 2]

The drawing is performed by preparing several kinds of glass base materials with an outside diameter different from one another and respectively forming taper portions by fusing. Fig. 10 shows relation between a ratio $\delta/D$ between distortion $\delta$ of the taper portion at that time and the glass base material outside diameter D and excess length of the drawn optical fiber. An approximate straight line 25 in the drawing is obtained by least squares approximation computing for a plotting point in an area in which $\delta/D$>=0.035. From Fig. 10, in a range in which $\delta/D$<=0.03, it can be confirmed that the excess length does not vary almost and extremely becomes small.

Industrial Applicability

The manufacturing cost of optical fiber can be lowered by using the glass base material obtained in a manufacturing method of the present invention, and this method is extremely valid.

**Claims**

**1.** A method for manufacturing a glass base material for drawing an optical fiber, the glass base material having a straight base and a taper portion that is formed on one end of the straight base and of which a diameter becomes narrow as the taper portion departs from the straight base, the manufacturing method comprising:

providing a cylindrical glass base material with a straight base, the one end of the straight base being a part having an outside diameter of a value obtained by multiplying a coefficient $\beta$ in a range of 0.90 to 1.00 (no dimension) by the average outside diameter D,
measuring displacement amount along a longitudinal direction of the glass base material, the center-line displacement amount being an amount by which the center line of the glass base material (1) for drawing is displaced from a straight line passing through the center of each end of the straight base,
modifying a center-line displacement amount of a taper formation point to a predetermined numeric value not more than 2.6 mm to form a modified point; and
fusing the glass base material at the modified point to form the taper portion, wherein a ratio $\delta/D$ between the average outside diameter D and a taper portion distortion $\delta$ is $\delta/D <= 0.03$, wherein the taper portion distortion $\delta$ is a maximum value of a center-line displacement amount between the one end of the straight base and the distortion evaluating end of the taper portion.

2. The method as claimed in claim 1, wherein the center-line displacement amount of a taper formation point for a center-line of an effective straight base is modified by heating the glass base material (1) with a burner flame while rotating the glass base material (1) by means of a glass lathe.

3. The manufacturing method as claimed in claim 2, wherein the center-line displacement amount is modified to a numeric value of 2.6 mm.

4. The manufacturing method as claimed in any one of claims 2 to 3, wherein the modified glass base material (1) is fused at the taper formation point to form the taper portion (4) by heating the glass base material (1) with a burner flame.

5. The manufacturing method as claimed in any one of claims 2 to 4, wherein the modified glass base material (1) is attached to a drawing apparatus, and the fusing is performed just before drawing.

## Patentansprüche

1. Verfahren zum Herstellen eines Glasbasismaterials zum Ziehen einer optischen Faser, welches Glasbasismaterial eine gerade Basis und einen konischen Bereich, der an einem Ende der geraden Basis gebildet ist und dessen Durchmesser mit zunehmendem Abstand des konischen Bereichs von der geraden Basis enger wird, hat, welches Herstellungsverfahren aufweist:

Bereitstellen eines zylindrischen Glasbasismaterials mit einer geraden Basis, wobei das eine Ende der geraden Basis ein Teil mit einem äußeren Durchmesser von einem Wert, der durch Multiplizieren eines Koeffizienten $\beta$ in einem Bereich von 0,90 bis 1,00 (keine Dimension) mit dem durchschnittlichen äußeren Durchmesser D erhalten wird, ist,
Messen eines Betrags der Versetzung von einer Mittellinie entlang einer Längsrichtung des Glasbasismaterials, wobei der Betrag der Versetzung von der Mittellinie ein Betrag ist, um den die Mittellinie des Glasbasismaterials (1) zum Ziehen von einer geraden Linie, die durch die Mitte jedes Endes der geraden Basis hindurchgeht, versetzt ist,
Modifizieren eines Mittellinien-Versetzungsbetrags eines Konizitätsbildungspunkts auf einen vorbestimmten numerischen Wert, der nicht größer als 2,6 mm ist, um einen modifizierten Punkt zu bilden; und
Schmelzen des Glasbasismaterials an dem modifizierten Punkt, um den konischen Bereich zu bilden, wobei ein Verhältnis $\delta/D$ zwischen dem durchschnittlichen äußeren Durchmesser D einer Verzerrung $\delta$ des konischen Bereichs $\delta/D <= 0,03$ ist, und wobei die Verzerrung $\delta$ des konischen Bereichs ein maximaler Wert eines Mittellinien-Versetzungsbetrags zwischen dem einen Ende der geraden Basis und dem Verzerrungsbewertungsende des konischen Bereichs ist.

2. Verfahren nach Anspruch 1, bei dem der Mittellinien-Versetzungsbetrag eines Konizitätsbildungspunkts für eine Mittellinie einer effektiven geraden Basis modifiziert wird durch Erwärmen des Glasbasismaterials (1) mit einer Brennerflamme, während das Glasbasismaterial. (1) mittels einer Glasdrehvorrichtung gedreht wird.

3. Verfahren nach Anspruch 2, bei dem der Mittellinien-Versetzungsbetrag auf einen numerischen Wert von 2,6 mm modifiziert wird.

**4.** Verfahren nach einem der Ansprüche 2 bis 3, bei dem das modifizierte Glasbasismaterial (1) an dem Konizitätsbildungspunkt geschmolzen wird, um den konischen Bereich (4) durch Erwärmen des Glasbasismaterials (1) mit einer Brennerflamme zu bilden.

**5.** Verfahren nach einem der Ansprüche 2 bis 4, bei dem das modifizierte Glasbasismaterial (1) an einer Ziehvorrichtung angebracht wird, und das Schmelzen vor dem Ziehen durchgeführt wird.

**Revendications**

**1.** Procédé pour fabriquer un matériau de base en verre pour étirer une fibre optique, le matériau de base en verre comportant une base droite et une portion à flancs inclinés qui est formée sur une extrémité de la base droite et dont un diamètre devient plus petit lorsque la portion à flancs inclinés s'écarte de la base droite, le procédé de fabrication comprenant :

la fourniture d'un matériau de base en verre cylindrique muni d'une base droite, l'extrémité considérée de la base droite étant une partie présentant un diamètre externe d'une valeur obtenue en multipliant un coefficient $\beta$ dans une plage de 0,90 à 1,00 (adimensionnel) par le diamètre externe moyen D ;
la mesure d'une quantité de déplacement de ligne centrale dans une direction longitudinale du matériau de base en verre, la quantité de déplacement de ligne centrale étant une quantité dont la ligne centrale du matériau de base en verre (1) pour l'étirement est déplacée par rapport à une ligne droite qui passe par le centre de chaque extrémité de la base droite ;
la modification d'une quantité de déplacement de ligne centrale d'un point de formation de flancs inclinés selon une valeur numérique prédéterminée non supérieure à 2,6 mm afin de former un point modifié ; et
la fusion du matériau de base en verre au niveau du point modifié afin de former la portion à flancs inclinés, dans lequel un rapport $\delta/D$ entre le diamètre externe moyen D et une distorsion de portion à flancs inclinés $\delta$ est $\delta/D \leq 0,03$, dans lequel la distorsion de portion à flancs inclinés $\delta$ est une valeur maximum d'une quantité de déplacement de ligne centrale entre l'extrémité considérée de la base droite et l'extrémité d'évaluation de distorsion de la portion à flancs inclinés.

**2.** Procédé selon la revendication 1, dans lequel la quantité de déplacement de ligne centrale d'un point de formation de flancs inclinés pour une ligne centrale d'une base droite effective est modifiée en chauffant le matériau de base en verre (1) à l'aide d'une flamme de brûleur tout en faisant tourner le matériau de base en verre (1) au moyen d'un tour à verre.

**3.** Procédé de fabrication selon la revendication 2, dans lequel la quantité de déplacement de ligne centrale est modifiée selon une valeur numérique de 2,6 mm.

**4.** Procédé de fabrication selon l'une quelconque des revendications 2 et 3, dans lequel le matériau de base en verre modifié (1) est fondu au niveau du point de formation de flancs inclinés afin de former la portion à flancs inclinés (4) en chauffant le matériau de base en verre (1) à l'aide d'une flamme de brûleur.

**5.** Procédé de fabrication selon l'une quelconque des revendications 2 à 4, dans lequel le matériau de base en verre modifié (1) est fixé à un appareil d'étirement, et la fusion est réalisée juste avant l'étirement.

2 ~      1 ~        ~ 2

*FIG. 1*

4 ~      1 ~        ~ 3

*FIG. 2*

*FIG. 3*

FIG. 4A

16 OUTSIDE-DIAMETER STABLE POINT

OUTSIDE-DIAMETER
SPECIFICATION RANGE

OUTSIDE DIAMETER

DRAWING DISTANCE

FIG. 4B

18 OVERALL LENGTH
PRODUCT

17 ECCENTRIC STABLE POINT

ECCENTRICITY

ECCENTRIC SPECIFICATION RANGE

DRAWING DISTANCE

FIG. 5

FIG. 6

FIG. 7A

FIG. 7B

EP 1 772 438 B1

GLASS BASE MATERIAL CENTER-LINE
DISPLACEMENT BEFORE FORMING TAPER PORTION

*FIG. 8A*

DISTORTION OF FORMED TAPER PORTION

*FIG. 8B*

15

*FIG. 9*

*FIG. 10*

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000143268 A
- JP 2000203864 A
- JP 2001080931 A
- JP 3222777 B